(19) Europäisches Patentamt / European Patent Office / Office européen des brevets

(11) **EP 3 739 802 B1**

(12) **EUROPEAN PATENT SPECIFICATION**

(45) Date of publication and mention
of the grant of the patent:
**06.09.2023 Bulletin 2023/36**

(21) Application number: **20172213.9**

(22) Date of filing: **29.04.2020**

(51) International Patent Classification (IPC):
*H04L 5/00* (2006.01)   *H04W 48/16* (2009.01)
*H04W 72/04* (2023.01)   *H04W 74/08* (2009.01)

(52) Cooperative Patent Classification (CPC):
**H04L 5/0037; H04L 5/0058; H04W 72/0446;
H04W 76/27; H04W 76/28;** H04W 48/16

(54) **BASE STATION AND SEARCH SPACE ALLOCATION METHOD THEREOF**

BASISSTATION UND SUCHRAUMZUORDNUNGSVERFAHREN DAFÜR

STATION DE BASE ET PROCÉDÉ D'ATTRIBUTION D'ESPACE DE RECHERCHE ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2019 CN 201910410568**

(43) Date of publication of application:
**18.11.2020 Bulletin 2020/47**

(73) Proprietor: **Sernet (Suzhou) Technologies
Corporation
Suzhou, Jiangsu (CN)**

(72) Inventor: **CHEN, Xiaoan
Suzhou, Jiangsu (CN)**

(74) Representative: **Emde, Eric
Wagner & Geyer Partnerschaft mbB
Patent- und Rechtsanwälte
Gewürzmühlstrasse 5
80538 München (DE)**

(56) References cited:
**US-A1- 2015 264 665     US-A1- 2018 287 734**

**Description**

BACKGROUND

Technical Field

The disclosure relates to a radio resource management, and in particular to a base station and a search space allocation method thereof.

Description of Related Art

In the narrowband internet of things (NB-IoT) system or similar systems, in order to detect whether there is a downlink transmission allocation or uplink transmission authorization, the user equipment will detect the downlink control indicator (DCI) carried by the narrowband physical downlink control channel (NPDCCH) in the downlink. The base station will set multiple predetermined time intervals for the user equipment to monitor and decode accordingly. The multiple predetermined time intervals may be referred to as search spaces. After the user equipment receives the DCI belonging to itself, the user equipment will receive or transmit data from the corresponding data transmission region (i.e., the narrowband physical downlink shared channel (NPDSCH) or the narrowband physical uplink shared channel (NPUSCH)) according to the indicator content.

It is worth noting that the length of the search space may change due to different characteristics of the user equipment. However, as the number of users increases, the number of users that the base station can serve per unit time will be limited, and the overall transmission speed of the user equipment may be reduced. As such, the efficiency of radio resource utilization will be affected by how the base station indicates the search space and the timing of monitoring to the user equipment.

Further reference is made to US 2018/287734 A1 referring to techniques for monitoring for control information in sets of downlink control channel resources, where multiple sets of downlink control channel resources may overlap. The techniques include monitoring for one or more search spaces in a set of downlink control channel resources by rate-matching downlink control channel resources independently of other sets of downlink control channel resources. Alternatively, overlapping sets of downlink control channel resources may be rate-matched accounting for reference signals of overlapping sets of downlink control channel resources.

SUMMARY

In accordance with the present invention a method, and a base station, as set forth in the independent claims, respectively, are provided. Preferred embodiments of the invention are described in the dependent claims.

The present invention relates to radio resource management and more particularly to search space allocation for time division multiplexing a physical downlink control channel, so as to more effectively utilize limited spectrum resources.

BRIEF DESCRIPTION OF THE DRAWINGS

The drawings are included to provide further understanding of the present invention, and the drawings are incorporated into the specification and constitute a part of the specification. The drawings illustrate embodiments of the present invention and serve to explain the principles of the present invention together with the descriptions.

FIG. 1 is a schematic diagram of a communication system according to an embodiment of the present invention.
FIG. 2 is a block diagram of components of a base station according to an embodiment of the present invention.
FIG. 3 is a flowchart of a search space allocation method according to an embodiment of the present invention.
FIG. 4 is a flowchart of determining a valid time position according to an embodiment of the present invention.
FIG. 5 is a flowchart of determining a time position of each user equipment according to an embodiment of the present invention.
FIG. 6 is an example illustrating a chronological chart adopting a fixed time position.
FIG. 7 is an example illustrating a chronological chart adopting an embodiment of the present invention to determine a time position.
FIG. 8A is an example illustrating a simulation diagram of a transmission speed for an uplink adopting a fixed time position.
FIG. 8B is an example illustrating a simulation diagram of a transmission speed for an uplink adopting an embodiment of the present invention to determine a time position.

FIG. 9A is an example illustrating a simulation diagram of a transmission speed for a downlink adopting a fixed time position.

FIG. 9B is an example illustrating a simulation diagram of a transmission speed for a downlink adopting an embodiment of the present invention to determine a time position.

DETAILED DESCRIPTION OF DISCLOSED EMBODIMENTS

References will now be made in detail to the exemplary embodiments of the present invention, examples of the exemplary embodiments are illustrated in the drawings. Wherever possible, the same reference numerals are used in the drawings and descriptions to refer to the same or similar parts.

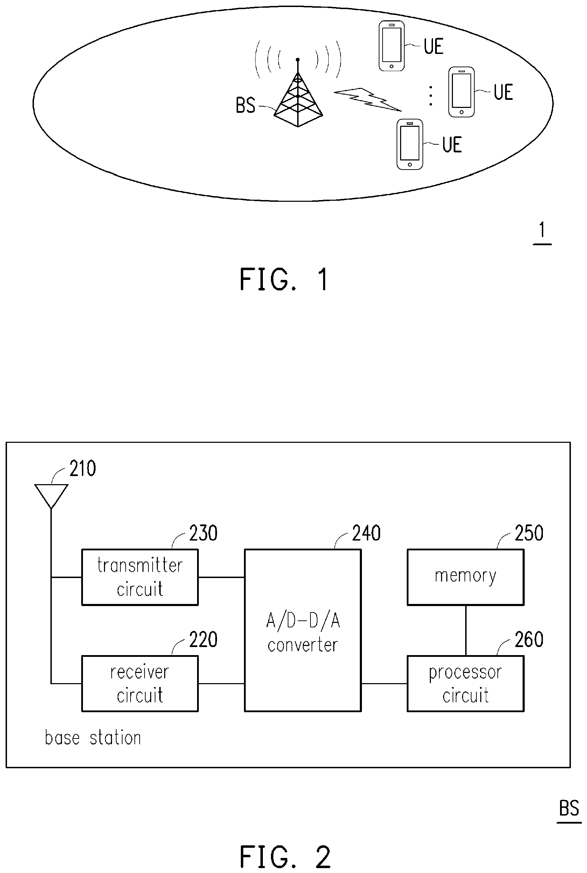

FIG. 1 is a schematic diagram of a communication system according to an embodiment of the present invention. Referring to FIG. 1, a communication system 1 includes, but is not limited to, a base station BS and one or more user equipment UE.

The base station BS is, but is not limited to, for example, a home evolved Node-B (HeNB), an evolved Node-B (eNB), a next generation Node-B (gNB), an advanced base station (ABS), a base transceiver system (BTS), a relay, a repeater, or a satellite-based communication base station.

FIG. 2 is a block diagram of components of a base station BS according to an embodiment of the present invention. The base station BS may at least include, but is not limited to, one or more antennas 210, a receiver circuit 220, a transmitter circuit 230, an analog/digital (A/D)-digital/analog (D/A) converter 240, a memory 250, and a processor circuit 260.

The receiver circuit 220 and the transmitter circuit 230 are respectively configured to wirelessly receive an uplink signal and transmit a downlink signal through the antenna 210. The receiver circuit 220 and the transmitter circuit 230 may also perform analog signal processing operations such as low noise amplification, impedance matching, frequency mixing, frequency up-conversion or down-conversion, filtering, amplification, and the like. The A/D-D/A converter 240 is configured to perform analog-to-digital conversion for an uplink and digital-to-analog conversion for a downlink.

The memory 250 is, but is not limited to, for example, a random-access memory (RAM), a read-only memory (ROM), a flash memory, similar components, or a combination of the components. The memory 250 records program code, device configuration, codebook, buffered or permanent data, and various related communications protocol software modules such as radio resource control (RRC) layer, media access control (MAC) layer, physical layer, etc.

The processor circuit 260 is configured to process digital signal, perform program according to an exemplary embodiment of the present invention, and access or load data and software modules recorded by the memory 250. The processor circuit 260 may be implemented by a programmable unit such as a central processing unit (CPU), a microprocessor, a microcontroller, a digital signal processing (DSP) chip, a field programmable logic gate array (FPGA), and the like. The processor circuit 260 may also be implemented by a separate electronic device or an integrated circuit, and the operation of the processor circuit 260 may also be implemented by a software.

The user equipment UE may include, but is not limited to, a mobile station, an advanced mobile station (AMS), a telephone device, a customer premise equipment (CPE), a radio sensor, an internet of things (IoT) device, and the like.

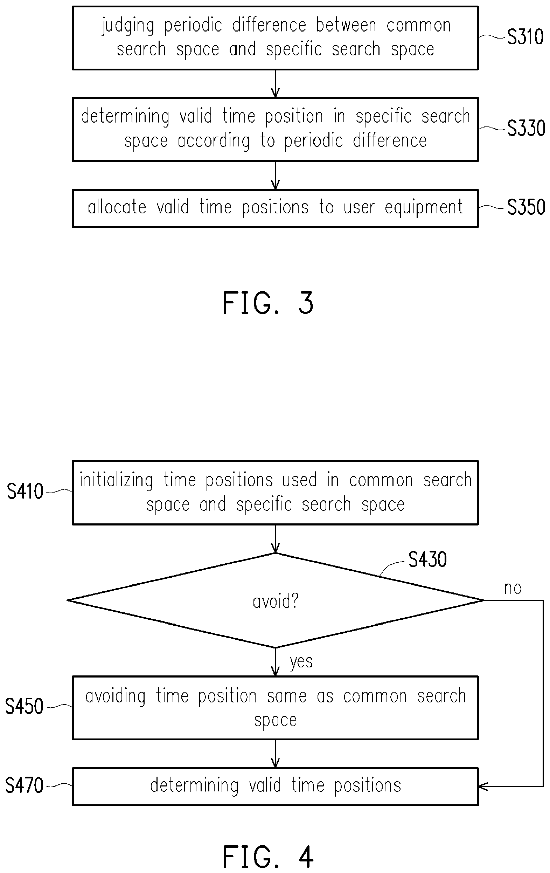

FIG. 3 is a flowchart of a search space allocation method according to an embodiment of the present invention. Referring to FIG. 3, a processor circuit 260 of a base station BS judges a periodic difference between a common search space and a specific search space (Step S310). Specifically, the common search space is a time interval for a user equipment UE not under a connected mode (for example, an idle mode, the stage of being not yet registered with the core network, etc.) to monitor the physical downlink control channel. For example, the common search space may be a type 2 common search space for a random-access process defined by 3GPP TS 36.213. If the user equipment UE intends to transmit data or receive a paging message from the base station BS, the user equipment UE starts the random-access process. The base station BS notifies the user equipment UE to receive a random-access response (RAR) message, a hybrid automatic repeat request (HARQ) retransmission of a message 3 (Msg3; for example, an RRC connection request in response to the RAR received), or a message 4 (Msg4; for example, a contention resolution message). It should be noted that, in other embodiments, the common search space may also be a type 1 common search space configured to notify to transmit the paging message or other search spaces configured to notify the signaling transmitted during a process before or after the user equipment UE is in the connected mode.

On the other hand, the specific search space is a time interval for the user equipment UE under the connected mode to monitor the physical downlink control channel. For example, the specific search space may be a user equipment-specific search space (USS) defined by 3GPP TS 36.213. The base station BS notifies the user equipment UE on the USS to receive a scheduling message of an uplink or downlink data.

The search spaces are all set with a specific period, that is, a time interval from the starting point of the current search space to the starting point of the next search space. The period of the search space is notified to the user equipment UE by the base station BS. For example, in 3GPP TS 36.213, the period is defined as:

$$T = R_{max} \cdot G \ldots (1)$$

where T is the period, $R_{max}$ is the maximum number of retransmissions, and G is the starting subframe in the search space with a value range of [1.5, 2, 4, 8, 16, 32, 48, 64]. In addition, G for the type 2 common search space is indicated by npdcch-StartSF-CSS-RA or npdcch-startSF-SC-MTCH; and G for the USS is indicated by npdcch-StartSF-USS.

The processor circuit 260 uses the difference between the period of the common search space and the period of the specific search space as the periodic difference. In an embodiment, the difference refers to the comparison between the magnitudes of the two periods. For example, the period of the common search space is greater than the period of the specific search space or the period of the common search space is not greater than the period of the specific search space.

Next, the processor circuit 260 determines a valid time position in the specific search space according to the periodic difference (Step S330). For example, according to 3GPP TS 36.213, an initial transmission time point k0 (also known as the starting position for search space) for a narrowband physical downlink control channel (NPDCCH) is defined as follows:

$$k_0 = \left(10n_f + \lfloor n_s/2 \rfloor\right) \bmod T = \lfloor \alpha_{offset} \cdot T \rfloor \ldots (2)$$

where for a specific search space, T is the period of the specific search space, $\alpha_{offset}$ is the position offset with a value range of [0, 1/8, 1/4, 3/8] and may be configured by npcch-Offset-USS. For example, if there are 8 subframes in the period, the position offset of 0 corresponds to a first time position (subframe) in the search space, the position offset of 1/8 corresponds to a second time position, and so on.

The time position / position offset according to the embodiment of the present invention represents the $n^{th}$ subframe in a physical downlink control channel period (PP). For example, a time position of 3 represents the $3^{rd}$ subframe in the period. However, in other embodiments, there may be changes due to different definitions of the length of time. In addition, each valid time position represents the time position at which the physical downlink control channel is initially transmitted and the valid time positions do not overlap with each other. In an embodiment, the valid time position is determined based on whether time positions used in the specific search space and the common search space overlap. For example, if the position offset of the specific search space is 0, 1/4, and 3/8, and the position offset used in the common search space is 1/4, then the position offsets of the two search spaces overlap and the valid time position may the position offset of 0, 1/4, and 3/8 (including the commonly used time position) or the position offset of 0 and 3/8 (excluding the commonly used time position). The determination of the valid time position will be described in detail in the subsequent embodiment. In addition, the valid time position represents the time position in the specific search space which can be finally used by the user equipment UE for monitoring.

FIG. 4 is a flowchart of determining a valid time position according to an embodiment of the present invention. Referring to FIG. 4, the processor circuit 260 initializes the time positions used in the common search space and the specific search space (Step S410). For example, in 3GPP TS 36.213, the time position used in the common search space is configured according to npdcch-Offset-CSS (common search space parameters recorded in a system information block type 2 (SIB2)). The time positions used in the specific search space are configured according to npcch-Offset-USS (specific search space parameters recorded in an RRC connection establishment request).

Next, the processor circuit 260 judges whether the time positions used in the specific search space have to avoid the time position used in the common search space (Step S430). In an embodiment, if the periodic difference is that the period of the common search space is not smaller than the period of the specific search space, the processor circuit 260 reduces the number of valid time positions and avoids the time position used in the common search space (Step S450). The term "avoid" represents making the time positions used in the specific search space and the common search space to not overlap. For example, it is assumed that there is a total of four time positions used in the specific search space and the period of the common search space is equal to the period of the specific search space. Usually only one time position needs to be occupied by the common search space as indicator, so the time position used in the specific search space that is the same as the time position used in the common search space needs to be avoided and the original four valid time positions are reduced to three to avoid two indicators in different search spaces from overlapping at the same time position. It should be noted that, in other embodiments, the time position used in the common search space may not overlap with the time positions used in the specific search space, so there is no need to avoid or change the number of valid time positions. In addition, the number of time position required by the common search space may be greater than one and the number of valid time positions of the specific search space may be correspondingly reduced by the same number.

In another embodiment, if the periodic difference is that the period of the common search space is smaller than the period of the specific search space, the processor circuit 260 sets the number of valid time positions to the maximum value and does not avoid the time position used in the common search space. The term "does not avoid" represents that in the case where the specific search space and the common search space use the same time position, the configuration of the two search spaces using the same time position remains unchanged. That is, the time positions used in the two search spaces are allowed to overlap. For example, it is assumed that there is a total of four time positions used in the specific search space, the maximum number of valid time positions is four, and the period of the common search space is smaller than the period of the specific search space. At this time, the processor circuit 260 retains the original four valid time positions, that is, the valid time positions are maintained at the maximum value. It should be noted that, in other embodiments, the number of time positions required by the common search space may be greater than one and the processor circuit 260 may further determine whether to avoid based on the number required by the common search space.

Next, the processor circuit 260 determines the final valid time positions of the specific search space (Step S470). For the case where avoidance is required, the subset of valid time positions is the subset of time positions used in the specific search space minus the subset of time position used in the common search space. For example, if the subset used in the specific search space is [0, 1/4, 3/8] and the subset used in the common search space is [1/4], then the subset of valid time positions is confirmed to be [0, 3/8] (that is, two valid values). For the case where avoidance is not required, the subset of valid time positions is equivalent to the subset of time positions used in the specific search space. For example, if the subset used in the specific search space is [0, 1/8, 1/4, 3/8] and the subset used in the common search space is [1/8], then the subset of valid time positions is confirmed to be [0, 1/8, 1/4, 3/8] (that is, four valid values).

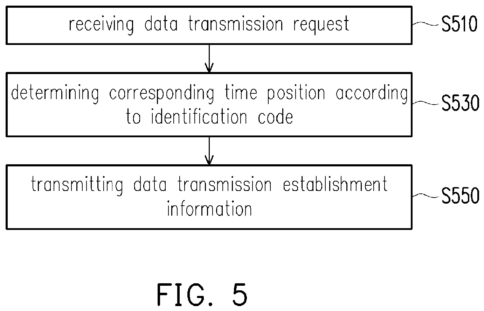

Referring to FIG. 3, after the valid time positions of the specific search space are confirmed, the processor circuit 260 may allocate the valid time positions to the user equipment UE (Step S350). In an embodiment, the processor circuit 260 determines the time position corresponding to each user equipment UE according to an identification code of the user equipment UE. FIG. 5 is a flowchart of determining a time position of each user equipment UE according to an embodiment of the present invention. Referring to FIG. 5, the processor circuit 260 receives a data transmission request from the user equipment UE through the receiver circuit 220 (Step S510). For example, the data transmission request is an RCC connection request of the Msg3. Alternatively, the data transmission request may be other messages configured to request radio resources for the data intended to be received or transmitted.

The processor circuit 260 may obtain the identification code of the user equipment UE from the data transmission request and determine the time position corresponding to the user equipment UE according to the identification code (Step S530). For example, the RCC connection request is recorded with a cell radio network temporary identifier (C-RNTI) of the user equipment UE. Alternatively, the identification code may be a temporary identifier of another radio network or any identifier configured to distinguish between different user equipment UE, such as a unique identifier.

In an embodiment, the processor circuit 260 may perform a hash operation on the identification code of the user equipment UE based on the number of valid time positions. For example, if the number of final valid time positions in a search space is 3 (i.e., three valid values), the processor circuit 260 may perform the hash operation of the exclusive-OR equation (3) or (4) on every two bits in the C-RNTI:

$$f(x) = C\text{-}RNTI \bmod 3 ...(3)$$

$$f(x) = (2 \cdot x_{32} + x_{31}) \oplus (2 \cdot x_{30} + x_{29}) \oplus ... \oplus (2 \cdot x_2 + x_1) ...(4)$$

where f(x) is the time position (for example, the position offset $\alpha_{offset}$) allocated to the user equipment UE, C-RNTI is the cell radio network temporary identifier, mod represents modulo operation, and $x_1 \sim x_{32}$ respectively represent the values of different bits in the identification code.

It should be noted that, in other embodiments, other operations or correspondence tables associating the identification code of the user equipment UE with the time position may be applied.

In an embodiment, when the number of user equipment UE required to receive indicators at the same time increases and the number of the user equipment UE is greater than the available number of time positions in the specific search space (for example, the number is greater than three, four, etc.), the processor circuit 260 may use time division multiplexing to allocate the time positions in the specific search space to the user equipment UE. The available number is related to the number of time positions that have not been allocated to the user equipment UE. For example, npcch-Offset-USS in 3GPP TS 36.213 is recorded with the available time positions in the specific search space. In addition, the time division multiplexing method is that the processor circuit 260 respectively allocates different time positions in a single period of the specific search space to different user equipment UE. For example, the processor circuit 260 allocates a first subframe in a certain time period within the specific search space to a first user equipment UE, allocates a second subframe to a second user equipment UE, and so on. If a third subframe is a valid time position, the processor circuit 260 may also allocate the third subframe to a third user equipment UE.

In another embodiment, different user equipment UE may use the same time position within different time periods of the specific search space. For example, after calculation, if the time position allocated to the first user equipment UE is the same as the second user equipment UE, the third subframe within the first time period is allocated to the first user equipment UE and the third subframe within the subsequent second time period is allocated to the second user equipment UE. By analogy, the processor circuit 260 may also allocate the third subframe in the subsequent time period to another user equipment UE.

In yet another embodiment, when the number of user equipment UE required to receive indicators at the same time is smaller than the number of valid time positions, the processor circuit 260 makes the time positions used by the user equipment UE to be different.

Next, the processor circuit 260 may transmit a data transmission establishment message through the transmitter circuit 230 (Step S550). The data transmission establishment message is, for example, an RCC connection establishment request in response to an RCC connection request. Alternatively, the data transmission request may be other messages configured to indicate radio resources of the data intended to be received or transmitted. The data transmission establishment message is recorded with the valid time positions corresponding to the user equipment UE. The user equipment UE then monitors the corresponding (allocated) valid time positions in the specific search space.

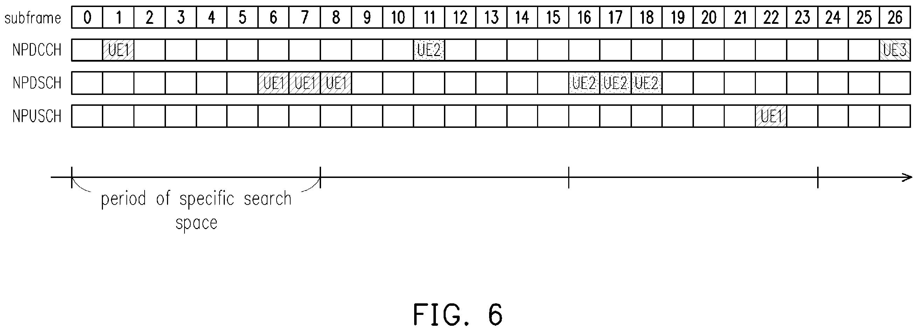

FIG. 6 is an example illustrating a chronological chart adopting a fixed time position. Referring to FIG. 6, it is assumed that all user equipment UE1 to UE3 use the second time position (subframe) and the period of the specific search space being eight subframes is taken as an example. It is also assumed that the $0^{th}$, $5^{th}$, $9^{th}$, $10^{th}$, $15^{th}$, $20^{th}$, and $25^{th}$ subframes are unavailable. The user equipment UE1 learns that the downlink data is received at the $6^{th}$-$8^{th}$ subframes of the narrowband physical downlink shared channel (NPDSCH) by monitoring the indicator of the base station BS at the $2^{nd}$ subframe. In the next period, since the $9^{th}$ and $10^{th}$ subframes are unavailable, the user equipment UE2 proceeds to the $11^{th}$ subframe (the second time position of the period is the $9^{th}$ subframe) to monitor the base station for indicator, and then receives the downlink data at the $16^{th}$-$18^{th}$ subframes. Then, since the $17^{th}$ subframe is used by the user equipment UE2 to receive the downlink data, the user equipment UE3 will wait for the idle $26^{th}$ subframe in the next period for monitoring.

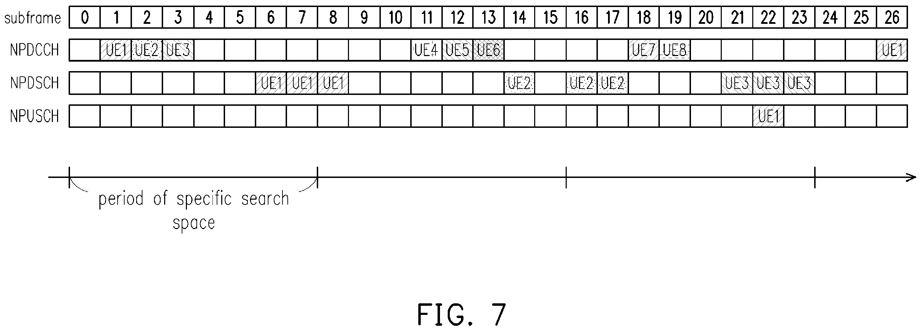

FIG. 7 is an example illustrating a chronological chart adopting an embodiment of the present invention to determine a time position. Referring to FIG. 7, the embodiment of the present invention adopts time division multiplexing, which can indicate the three user equipment UE1-UE3 to respectively use the $1^{st}$-$3^{rd}$ subframes to monitor the indicators of the base station BS within the same time period. That is, the different user equipment UE1-UE3 respectively monitor at three time positions within the same period. In the next period, since the $9^{th}$ and $10^{th}$ subframes are unavailable, three other user equipment UE4-UE6 respectively use the $11^{th}$-$13^{th}$ subframes to monitor the indicators of the base station BS. Then, in another period, user equipment UE7 and UE8 respectively use the $18^{th}$ and $19^{th}$ subframes for monitoring.

Compared with the chronological chart of FIG. 6, in three time periods, FIG. 7 using time division multiplexing has indicated to the eight user equipment UE1-UE8 regarding the respective radio resource allocation result, but FIG. 6 using fixed time position has only indicated to the two user equipment UE1 and UE2. In addition, the earlier the radio resource allocation result is notified, the earlier the NPDSCH or the narrowband physical uplink shared channel (NPUSCH) can be configured to receive or transmit data as compared to the prior art using fixed time position. For example, the user equipment UE3 in FIG. 7 performs monitoring in the specific search space two periods earlier than the user equipment UE3 in FIG. 6, and the user equipment UE3 in FIG. 7 also receives the downlink data in the NPDSCH two periods earlier than the user equipment UE3 in FIG. 6. It is conceivable that more data can be transmitted within the same time interval, which will increase the overall transmission speed of the system.

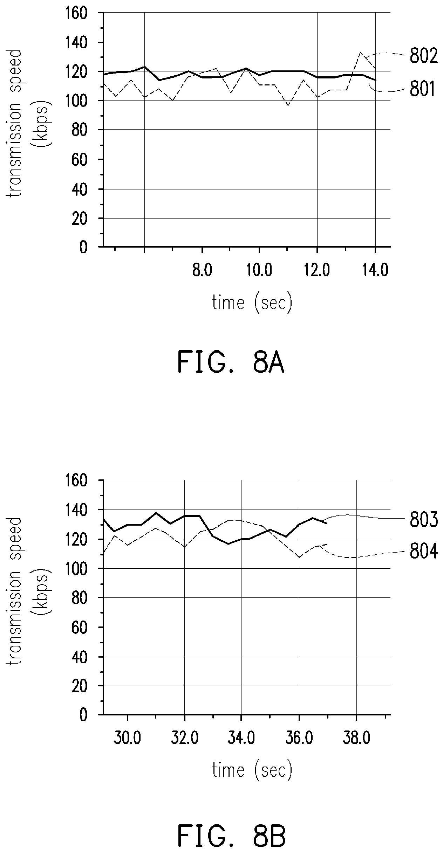

FIG. 8A is an example illustrating a simulation diagram of a transmission speed for an uplink adopting a fixed time position. FIG. 8B is an example illustrating a simulation diagram of a transmission speed for an uplink adopting an embodiment of the present invention to determine a time position. Referring to FIG. 8A and FIG. 8B at the same time, a transmission speed 801 for a media access control (MAC) layer and a transmission speed 802 for a packet data convergence protocol (PDCP) are compared with transmission speeds 803 and 804 of the corresponding layers according to the embodiment of the present invention.

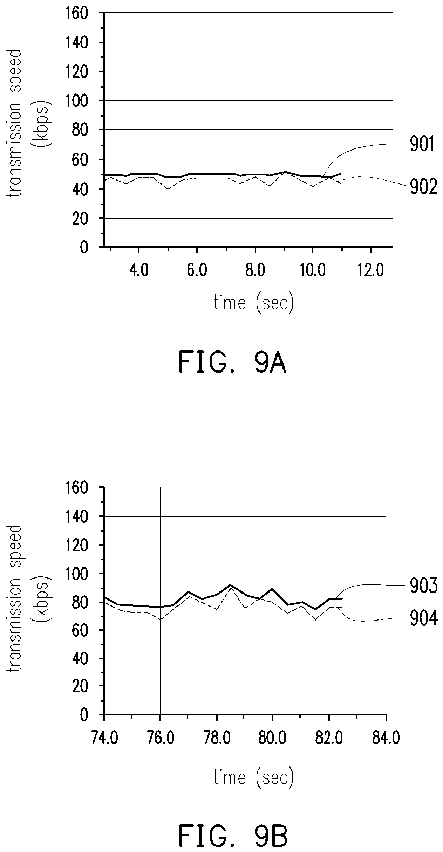

FIG. 9A is an example illustrating a simulation diagram of a transmission speed for a downlink adopting a fixed time position. FIG. 9B is an example illustrating a simulation diagram of a transmission speed for a downlink adopting an embodiment of the present invention to determine a time position. Referring to FIG. 9A and FIG. 9B at the same time, a transmission speed 901 for the MAC layer and a transmission speed 902 for the PDCP are compared with transmission speeds 903 and 904 of the corresponding layers according to the embodiment of the present invention.

Therefore, it can be known that the use of time division multiplexing mechanism according to the embodiments of the present invention will improve the transmission speed / throughput of the uplink and downlink.

In summary, the base station and the search space allocation method thereof according to the embodiments of the present invention avoid the same time position / position offset used in the specific search space and the common search space under the condition that the period of the common search space is greater than the period of the specific search space. In addition, the identifier of the user equipment corresponds to the time position to implement time division multiplexing, so as to more effectively utilize limited radio resources. In actual tests, the total bandwidth of multiple user equipment can be significantly improved as compared to not using time division multiplexing.

**Claims**

1. A radio resource allocation method for transmitting downlink control signaling in a search space, performed by a base station, BS, the method comprising:

   comparing time periods of a common search space and a specific search space, to obtain a time difference between the time length of the periods of the common search space and the specific search space, wherein the common search space is a time interval for at least one user equipment (UE, UE1-UE8) not under a connected mode to monitor a physical downlink control channel and the specific search space is a time interval for the at least one user equipment (UE, UE1-UE8) under the connected mode to monitor the physical downlink control channel;
   modifying the number of at least one valid time position for the allocation of a radio resource in the specific search space according to the obtained time difference, wherein the at least one valid time position represents a time position in the specific search space in which the physical downlink control channel is initially transmitted and which can be finally used by the at least one user equipment (UE, UE1-UE8) for monitoring, wherein a plurality of valid time positions within the specific search space do not overlap with each other and wherein the at least one valid time position is determined based on whether time positions used in the specific search space and time positions used in the common search space overlap, and modifying the number of at least one valid time position comprises:

   reducing the number of the valid time positions and making the time positions used by the specific search space to not overlap with the time position used by the common search space when the obtained time difference is that the period of the common search space is not smaller than the period of the specific search space; and
   allocating a radio resource to the at least one valid time position for transmitting a physical downlink control channel in the specific search space to the at least one user equipment (UE, UE1-UE8).

2. The radio resource allocation method for transmitting downlink control signaling in a search space according to claim 1, wherein the step of modifying the number of at least one valid time position in the specific search space according to the obtained time difference comprises:
   setting the number of valid time positions to a maximum value, when the obtained time difference is that the period of the common search space is smaller than the period of the specific search space.

3. The radio resource allocation method for transmitting downlink control signaling in a search space according to claim 1, wherein the step of allocating the at least one valid time position to one of the user equipments (UE, UE1-UE8) comprises:
   allocating at least one time position in the specific search space to one of the user equipments (UE, UE1-UE8) using time division multiplexing in response to the number of the user equipments (UE, UE1-UE8) being greater than a number of time positions that are available for resource allocation in the specific search space, wherein the number of available time positions is related to a number of time positions not yet allocated to one of the user equipments (UE, UE1-UE8).

4. The radio resource allocation method for transmitting downlink control signaling in a search space according to claim 1, wherein the step of allocating the at least one valid time position to one of the user equipments (UE, UE1-UE8) comprises:
   determining a time position corresponding to each of the user equipments (UE, UE1-UE8) according to an identification code of each of the user equipments (UE, UE1-UE8).

5. The radio resource allocation method for transmitting downlink control signaling in a search space according to claim 4, wherein the step of determining a time position corresponding to each of the user equipments (UE, UE1-UE8) according to an identification code of each of the user equipments (UE, UE1-UE8) comprises:
   performing a hash operation on the identification code of each of the user equipments (UE, UE1-UE8) based on a number of the at least one valid time position, wherein the identification code of each of the user equipment (UE, UE1-UE8) is a unique identifier of each of the user equipments (UE, UE1-UE8) within a cell.

6. A base station, BS, comprising:

a receiver circuit (220), configured to receive a first signal;
a transmitter circuit (230), configured to transmit a second signal; and
a processor circuit (260), coupled to the receiver circuit (220) and the transmitter circuit (230), and configured to perform the following steps of:

comparing time periods of a common search space and a specific search space, to obtain a time difference between the time length of the periods of the common search space and the specific search space, wherein the common search space is a time interval for at least one user equipment (UE, UE1-UE8) not under a connected mode to monitor a physical downlink control channel and the specific search space is a time interval for the at least one user equipment (UE, UE1-UE8) under the connected mode to monitor the physical downlink control channel;
modifying the number of at least one valid time position for allocation of a radio resource in the specific search space according to the obtained time difference, wherein the at least one valid time position represents a time position in the specific search space in which the physical downlink control channel is initially transmitted and which can be finally used by the at least one user equipment (UE, UE1-UE8) for monitoring, wherein a plurality of valid time positions within the specific search space do not overlap with each other and wherein the at least one valid time position is determined based on whether time positions used in the specific search space and time positions used in the common search space overlap, and modifying the number of at least one valid time position comprises:

reducing the number of the valid time positions and making the time positions used by the specific search space to not overlap with the time position used by the common search space when the obtained time difference is that the period of the common search space is not smaller than the period of the specific search space; and
allocating a radio resource to the at least one valid time position for transmitting a physical downlink control channel in the specific search space to the at least one user equipment (UE, UE1-UE8).

7. The base station, BS, according to claim 6, wherein the processor circuit (260) is configured to perform in the step of modifying the number of at least one valid time position in the specific search space according to the obtained time difference the following steps of:
setting the number of valid time positions to a maximum value, when the obtained time difference is that the period of the common search space is smaller than the period of the specific search space.

8. The base station, BS, according to claim 6, wherein the processor circuit (260) is configured to perform the following step of:
allocating at least one time position in the specific search space to one of the user equipments (UE, UE1-UE8) using time division multiplexing in response to the number of user equipments (UE, UE1-UE8) being greater than a number of time positions that are available for resource allocation in the specific search space, wherein the number of available time positions is related to a number of time positions not allocated to one of the user equipments (UE, UE1-UE8).

9. The base station, BS, according to claim 6, wherein that there is a plurality of valid time positions and the processor circuit (260) is configured to perform the following step of:
determining a time position corresponding to each of user equipments (UE, UE1-UE8) according to an identification code of each of the user equipments (UE, UE1-UE8).

10. The base station, BS, according to claim 9, wherein the processor circuit (260) is configured to perform the following step of:
performing a hash operation on the identification code of each of the user equipments (UE, UE1-UE8) based on a number of the at least one valid time position, wherein the identification code of each of the user equipments (UE, UE1-UE8) is a unique identifier of each of the user equipments (UE, UE1-UE8) within a cell.

**Patentansprüche**

1. Ein Funkressourcenzuweisungsverfahren zum Übertragen von Abwärtsstrecken- bzw. Downlink-Kontrollsignalen in einem Suchraum, das von einer Basisstation, BS, durchgeführt wird, wobei das Verfahren Folgendes aufweist:

Vergleichen von Zeitperioden eines gemeinsamen Suchraums und eines spezifischen Suchraums, um eine Zeitdifferenz zwischen der Zeitlänge der Perioden des gemeinsamen Suchraums und des spezifischen Suchraums zu erhalten, wobei der gemeinsame Suchraum ein Zeitintervall für mindestens eine Benutzereinrichtung (UE, UE1-UE8) ist, das sich nicht in einem verbundenen Modus befindet, um einen physikalischen Downlink-Kontrollkanal zu überwachen, und der spezifische Suchraum ein Zeitintervall für die mindestens eine Benutzereinrichtung (UE, UE1-UE8) ist, das sich in dem verbundenen Modus befindet, um den physikalischen Downlink-Kontrollkanal zu überwachen;
Modifizieren der Anzahl von mindestens einer gültigen Zeitposition für die Zuweisung einer Funkressource in dem spezifischen Suchraum gemäß der erhaltenen Zeitdifferenz, wobei die mindestens eine gültige Zeitposition eine Zeitposition in dem spezifischen Suchraum darstellt, in der der physikalische Downlink-Kontrollkanal anfänglich übertragen wird und die schließlich von der mindestens einen Benutzereinrichtung (UE, UE1-UE8) zur Überwachung verwendet werden kann, wobei eine Vielzahl von gültigen Zeitpositionen innerhalb des spezifischen Suchraums einander nicht überlappen und wobei die mindestens eine gültige Zeitposition basierend darauf bestimmt wird, ob in dem spezifischen Suchraum verwendete Zeitpositionen und in dem gemeinsamen Suchraum verwendete Zeitpositionen überlappen, und das Modifizieren der Anzahl von mindestens einer gültigen Zeitposition aufweist:

Verringern der Anzahl der gültigen Zeitpositionen und Veranlassen, dass sich die von dem spezifischen Suchraum verwendeten Zeitpositionen nicht mit der von dem gemeinsamen Suchraum verwendeten Zeitposition überlappen, wenn die erhaltene Zeitdifferenz darin besteht, dass die Periode des gemeinsamen Suchraums nicht kleiner ist als die Periode des spezifischen Suchraums; und
Zuweisen einer Funkressource zu der mindestens einen gültigen Zeitposition zum Übertragen eines physikalischen Abwärtsstrecken-Kontrollkanals in dem spezifischen Suchraum an die mindestens eine Benutzereinrichtung (UE, UE1-UE8).

2. Funkressourcenzuweisungsverfahren zum Übertragen von Abwärtsstrecken-Kontrollsignalen in einem Suchraum gemäß Anspruch 1, wobei der Schritt des Modifizierens der Anzahl von mindestens einer gültigen Zeitposition in dem spezifischen Suchraum gemäß der erhaltenen Zeitdifferenz aufweist:
Einstellen der Anzahl der gültigen Zeitpositionen auf einen Maximalwert, wenn die erhaltene Zeitdifferenz darin besteht, dass die Periode des gemeinsamen Suchraums kleiner als die Periode des spezifischen Suchraums ist.

3. Funkressourcenzuweisungsverfahren zum Übertragen von Abwärtsstrecken-Kontrollsignalen in einem Suchraum nach Anspruch 1, wobei der Schritt des Zuweisens der mindestens einen gültigen Zeitposition an eine der Benutzereinrichtungen (UE, UE1-UE8) aufweist:
Zuweisen mindestens einer Zeitposition in dem spezifischen Suchraum zu einer der Benutzereinrichtungen (UE, UE1-UE8) unter Verwendung von Zeitmultiplexen als Reaktion darauf, dass die Anzahl der Benutzereinrichtungen (UE, UE1-UE8) größer ist als eine Anzahl von Zeitpositionen, die für eine Ressourcenzuweisung in dem spezifischen Suchraum verfügbar sind, wobei die Anzahl der verfügbaren Zeitpositionen mit einer Anzahl von Zeitpositionen in Beziehung steht, die noch nicht einer der Benutzereinrichtungen (UE, UE1-UE8) zugewiesen sind.

4. Funkressourcenzuweisungsverfahren zum Übertragen von Abwärtsstrecken-Kontrollsignalen in einem Suchraum nach Anspruch 1, wobei der Schritt des Zuweisens der mindestens einen gültigen Zeitposition an eine der Benutzereinrichtungen (UE, UE1-UE8)aufweist:
Bestimmen einer Zeitposition, die jeder der Benutzereinrichtungen (UE, UE1-UE8) entspricht, gemäß einem Identifikationscode jeder der Benutzereinrichtungen (UE, UE1-UE8).

5. Funkressourcenzuweisungsverfahren zum Übertragen von Abwärtsstrecken-Kontrollsignalen in einem Suchraum nach Anspruch 4, wobei der Schritt des Bestimmens einer Zeitposition entsprechend jeder der Benutzereinrichtungen (UE, UE1-UE8) gemäß einem Identifikationscode jeder der Benutzereinrichtungen (UE, UE1-UE8) aufweist:
Durchführen einer Hash-Operation an dem Identifikationscode jeder der Benutzereinrichtungen (UE, UE1-UE8) auf der Grundlage einer Nummer der mindestens einen gültigen Zeitposition, wobei der Identifikationscode jeder der Benutzereinrichtungen (UE, UE1-UE8) ein eindeutiger Identifikator jeder der Benutzereinrichtungen (UE, UE1-UE8) innerhalb einer Zelle ist.

6. Eine Basisstation, BS, die Folgendes aufweist:

eine Empfängerschaltung (220), die zum Empfang eines ersten Signals konfiguriert ist;
eine Senderschaltung (230), die zum Senden eines zweiten Signals konfiguriert ist; und
eine Prozessorschaltung (260), die mit der Empfängerschaltung (220) und der Senderschaltung (230) gekoppelt und so konfiguriert ist, dass sie die folgenden Schritte durchführt::

Vergleichen von Zeitperioden eines gemeinsamen Suchraums und eines spezifischen Suchraums, um eine Zeitdifferenz zwischen der Zeitlänge der Perioden des gemeinsamen Suchraums und des spezifischen Suchraums zu erhalten, wobei der gemeinsame Suchraum ein Zeitintervall für mindestens eine Benutzereinrichtung (UE, UE1-UE8) ist, das sich nicht in einem verbundenen Modus befindet, um einen physikalischen Abwärtsstrecken- bzw. Downlink-Kontrollkanal zu überwachen, und der spezifische Suchraum ein Zeitintervall für die mindestens eine Benutzereinrichtung (UE, UE1-UE8) in dem verbundenen Modus ist, um den physikalischen Downlink-Kontrollkanal zu überwachen;
Modifizieren der Anzahl von mindestens einer gültigen Zeitposition für die Zuweisung einer Funkressource in dem spezifischen Suchraum gemäß der erhaltenen Zeitdifferenz, wobei die mindestens eine gültige Zeitposition eine Zeitposition in dem spezifischen Suchraum darstellt, in der der physikalische Downlink-Kontrollkanal anfänglich übertragen wird und die schließlich von der mindestens einen Benutzereinrichtung (UE, UE1-UE8) zur Überwachung verwendet werden kann, wobei eine Vielzahl von gültigen Zeitpositionen innerhalb des spezifischen Suchraums einander nicht überlappen und wobei die mindestens eine gültige Zeitposition basierend darauf bestimmt wird, ob in dem spezifischen Suchraum verwendete Zeitpositionen und in dem gemeinsamen Suchraum verwendete Zeitpositionen überlappen, und das Modifizieren der Anzahl von mindestens einer gültigen Zeitposition aufweist:

Verringern der Anzahl der gültigen Zeitpositionen und Veranlassen, dass sich die von dem spezifischen Suchraum verwendeten Zeitpositionen nicht mit der von dem gemeinsamen Suchraum verwendeten Zeitposition überlappen, wenn die erhaltene Zeitdifferenz darin besteht, dass die Periode des gemeinsamen Suchraums nicht kleiner ist als die Periode des spezifischen Suchraums; und
Zuweisen einer Funkressource zu der mindestens einen gültigen Zeitposition zum Übertragen eines physikalischen Abwärtsstrecken-Kontrollkanals in dem spezifischen Suchraum an die mindestens eine Benutzereinrichtung (UE, UE1-UE8).

7. Basisstation (BS) nach Anspruch 6, wobei die Prozessorschaltung (260) so konfiguriert ist, dass sie in dem Schritt des Modifizierens der Anzahl von mindestens einer gültigen Zeitposition in dem spezifischen Suchraum gemäß der erhaltenen Zeitdifferenz die folgenden Schritte durchführt:
Einstellen der Anzahl der gültigen Zeitpositionen auf einen Maximalwert, wenn die ermittelte Zeitdifferenz darin besteht, dass die Periode des gemeinsamen Suchraums kleiner als die Periode des spezifischen Suchraums ist.

8. Basisstation, BS, nach Anspruch 6, wobei die Prozessorschaltung (260) konfiguriert ist, den folgenden Schritt auszuführen:
Zuweisen mindestens einer Zeitposition in dem spezifischen Suchraum zu einer der Benutzereinrichtungen (UE, UE1-UE8) unter Verwendung von Zeitmultiplexing als Reaktion darauf, dass die Anzahl der Benutzereinrichtungen (UE, UE1-UE8) größer ist als eine Anzahl von Zeitpositionen, die für eine Ressourcenzuweisung in dem spezifischen Suchraum verfügbar sind, wobei die Anzahl der verfügbaren Zeitpositionen in Beziehung zu einer Anzahl von Zeitpositionen steht, die nicht einer der Benutzereinrichtungen (UE, UE1-UE8) zugewiesen sind.

9. Basisstation BS nach Anspruch 6, wobei es eine Vielzahl gültiger Zeitpositionen gibt und die Prozessorschaltung (260) so konfiguriert ist, dass sie den folgenden Schritt ausführt:
Bestimmen einer Zeitposition, die jeder der Benutzereinrichtungen (UE, UE1-UE8) entspricht, gemäß einem Identifikationscode jeder der Benutzereinrichtungen (UE, UE1-UE8).

10. Basisstation (BS) nach Anspruch 9, wobei die Prozessorschaltung (260) so konfiguriert ist, dass sie den folgenden Schritt durchführt:
Durchführen einer Hash-Operation an dem Identifikationscode jeder der Benutzereinrichtungen (UE, UE1-UE8) basierend auf einer Anzahl der mindestens einen gültigen Zeitposition, wobei der Identifikationscode jeder der Benutzereinrichtungen (UE, UE1-UE8) ein eindeutiger Identifikator jeder der Benutzereinrichtungen (UE, UE1-UE8) innerhalb einer Zelle ist.

**Revendications**

1. Procédé d'allocation de ressource radio destiné à l'émission d'un signal de commande de liaison descendante dans un espace de recherche, effectué par une station de base, BS, le procédé comprenant :

la comparaison de périodes temporelles d'un espace de recherche commun et d'un espace de recherche spécifique, pour obtenir une différence de temps entre la longueur de temps des périodes de l'espace de recherche commun et de l'espace de recherche spécifique, dans lequel l'espace de recherche commun est un intervalle de temps pour au moins un équipement utilisateur (UE, UE1-UE8) qui n'est pas en mode connecté pour surveiller un canal de commande de liaison descendante physique et l'espace de recherche spécifique est un intervalle de temps pour l'au moins un équipement utilisateur (UE, UE1-UE8) en mode connecté pour surveiller le canal de commande de liaison descendante physique ;

la modification du nombre d'au moins une position temporelle valide pour l'allocation d'une ressource radio dans l'espace de recherche spécifique conformément à la différence temporelle obtenue, dans lequel l'au moins une position temporelle valide représente une position temporelle dans l'espace de recherche spécifique dans lequel le canal de commande de liaison descendante physique est initialement émis et qui peut être enfin utilisé par l'au moins un équipement utilisateur (UE, UE1-UE8) à des fins de surveillance, dans lequel une pluralité de positions temporelles valides dans l'espace de recherche spécifique ne se chevauchent pas les unes les autres et dans lequel l'au moins une position temporelle valide est déterminée sur la base de si des positions temporelles utilisées dans l'espace de recherche spécifique et des positions temporelles utilisées dans l'espace de recherche commun se chevauchent, et la modification du nombre d'au moins une position temporelle valide comprend :

la réduction du nombre de positions temporelles valides et l'action consistant à amener les positions temporelles utilisées par l'espace de recherche spécifique à ne pas chevaucher la position temporelle utilisée par l'espace de recherche commun lorsque la différence temporelle obtenue est que la période de l'espace de recherche commun n'est pas plus petite que la période de l'espace de recherche spécifique ; et l'allocation d'une ressource radio à l'au moins une position temporelle valide pour émettre un canal de commande de liaison descendante physique dans l'espace de recherche spécifique à l'au moins un équipement utilisateur (UE, UE1-UE8).

2. Procédé d'allocation de ressource radio destiné à émettre un signal de commande de liaison descendante dans un espace de recherche selon la revendication 1, dans lequel l'étape de modification du nombre d'au moins une position temporelle valide dans l'espace de recherche spécifique conformément à la différence temporelle obtenue comprend : la définition du nombre de positions temporelles valides à une valeur maximale, lorsque la différence temporelle obtenue est que la période de l'espace de recherche commun est plus petite que la période de l'espace de recherche spécifique.

3. Procédé d'allocation de ressource radio destiné à émettre un signal de commande de liaison descendante dans un espace de recherche selon la revendication 1, dans lequel l'étape d'allocation de l'au moins une position temporelle valide à un des équipements utilisateur (UE, UE1-UE8) comprend : l'allocation d'au moins une position temporelle dans l'espace de recherche spécifique à un des équipements utilisateur (UE, UE1-UE8) en utilisant un multiplexage par répartition dans le temps en réponse au fait que le nombre des équipements utilisateur (UE, UE1-UE8) est supérieur à un nombre de positions temporelles qui sont disponibles pour une allocation de ressource dans l'espace de recherche spécifique, dans lequel le nombre de positions temporelles disponibles est lié à un nombre de positions temporelles non encore allouées à un des équipements utilisateur (UE, UE1-UE8).

4. Procédé d'allocation de ressource radio destiné à émettre un signal de commande de liaison descendante dans un espace de recherche selon la revendication 1, dans lequel l'étape d'allocation de l'au moins une position temporelle valide à un des équipements utilisateur (UE, UE1-UE8) comprend : la détermination d'une position temporelle correspondant à chacun des équipements utilisateur (UE, UE1-UE8) conformément à un code d'identification de chacun des équipements utilisateur (UE, UE1-UE8) .

5. Procédé d'allocation de ressource radio destiné à émettre un signal de commande de liaison descendante dans un espace de recherche selon la revendication 4, dans lequel l'étape de détermination d'une position temporelle correspondant à chacun des équipements utilisateur (UE, UE1-UE8) conformément à un code d'identification de chacun des équipements utilisateur (UE, UE1-UE8) comprend : l'exécution d'une opération de hachage sur le code d'identification de chacun des équipements utilisateur (UE, UE1-UE8) sur la base d'un nombre de l'au moins une position temporelle valide, dans lequel le code d'identification de chacun des équipements utilisateur (UE, UE1-UE8) est un identifiant unique de chacun des équipements utilisateur (UE, UE1-UE8) dans une cellule.

6. Station de base, BS, comprenant :

   un circuit récepteur (220), configuré pour recevoir un premier signal ;
   un circuit émetteur (230), configuré pour émettre un deuxième signal ; et
   un circuit processeur (260), relié au circuit récepteur (220) et au circuit émetteur (230), et configuré pour effectuer les étapes suivantes de :

   comparaison de périodes temporelles d'un espace de recherche commun et d'un espace de recherche spécifique, pour obtenir une différence de temps entre la longueur de temps des périodes de l'espace de recherche commun et de l'espace de recherche spécifique, dans lequel l'espace de recherche commun est un intervalle de temps pour au moins un équipement utilisateur (UE, UE1-UE8) qui n'est pas en mode connecté pour surveiller un canal de commande de liaison descendante physique et l'espace de recherche spécifique est un intervalle de temps pour l'au moins un équipement utilisateur (UE, UE1-UE8) en mode connecté pour surveiller le canal de commande de liaison descendante physique ;
   modification du nombre d'au moins une position temporelle valide pour l'allocation d'une ressource radio dans l'espace de recherche spécifique conformément à la différence temporelle obtenue, dans lequel l'au moins une position temporelle valide représente une position temporelle dans l'espace de recherche spécifique dans lequel le canal de commande de liaison descendante physique est initialement émis et qui peut être enfin utilisé par l'au moins un équipement utilisateur (UE, UE1-UE8) à des fins de surveillance, dans lequel une pluralité de positions temporelles valides dans l'espace de recherche spécifique ne se chevauchent pas les unes les autres et dans lequel l'au moins une position temporelle valide est déterminée sur la base de si des positions temporelles utilisées dans l'espace de recherche spécifique et des positions temporelles utilisées dans l'espace de recherche commun se chevauchent, et la modification du nombre d'au moins une position temporelle valide comprend :

   la réduction du nombre de positions temporelles valides et l'action consistant à amener les positions temporelles utilisées par l'espace de recherche spécifique à ne pas chevaucher la position temporelle utilisée par l'espace de recherche commun lorsque la différence temporelle obtenue est que la période de l'espace de recherche commun n'est pas plus petite que la période de l'espace de recherche spécifique ; et
   l'allocation d'une ressource radio à l'au moins une position temporelle valide pour émettre un canal de commande de liaison descendante physique dans l'espace de recherche spécifique à l'au moins un équipement utilisateur (UE, UE1-UE8).

7. Station de base, BS, selon la revendication 6, dans laquelle le circuit processeur (260) est configuré pour effectuer dans l'étape de modification du nombre d'au moins une position temporelle valide dans l'espace de recherche spécifique conformément à la différence temporelle obtenue les étapes suivantes de :
   définition du nombre de positions temporelles valides à une valeur maximale, lorsque la différence temporelle obtenue est que la période de l'espace de recherche commun est plus petite que la période de l'espace de recherche spécifique.

8. Station de base, BS, selon la revendication 6, dans laquelle le circuit processeur (260) est configuré pour effectuer l'étape suivante de :
   l'allocation d'au moins une position temporelle dans l'espace de recherche spécifique à un des équipements utilisateur (UE, UE1-UE8) en utilisant un multiplexage par répartition dans le temps en réponse au fait que le nombre d'équipements utilisateur (UE, UE1-UE8) est supérieur à un nombre de positions temporelles qui sont disponibles pour une allocation de ressource dans l'espace de recherche spécifique, dans lequel le nombre de positions temporelles disponibles est lié à un nombre de positions temporelles non allouées à un des équipements utilisateur (UE, UE1-UE8) .

9. Station de base, BS, selon la revendication 6, dans laquelle il y a une pluralité de positions temporelles valides et le circuit processeur (260) est configuré pour effectuer l'étape suivante de :

détermination d'une position temporelle correspondant à chacun des équipements utilisateur (UE, UE1-UE8) conformément à un code d'identification de chacun des équipements utilisateur (UE, UEI-UE8).

10. Station de base, BS, selon la revendication 9, dans laquelle le circuit processeur (260) est configuré pour effectuer l'étape suivante de :

exécution d'une opération de hachage sur le code d'identification de chacun des équipements utilisateur (UE, UE1-UE8) sur la base d'un nombre de l'au moins une position temporelle valide, dans laquelle le code d'identification de chacun des équipements utilisateur (UE, UE1-UE8) est un identifiant unique de chacun des équipements utilisateur (UE, UE1-UE8) dans une cellule.

FIG. 1

FIG. 2

judging periodic difference between common search space and specific search space — S310

↓

determining valid time position in specific search space according to periodic difference — S330

↓

allocate valid time positions to user equipment — S350

# FIG. 3

S410 — initializing time positions used in common search space and specific search space

↓

S430 — avoid?

no →

yes ↓

S450 — avoiding time position same as common search space

↓

S470 — determining valid time positions ←

# FIG. 4

```
┌──────────────────────────────────────────┐
│     receiving data transmission request     │── S510
└──────────────────────────────────────────┘
                     │
                     ▼
┌──────────────────────────────────────────┐
│ determining corresponding time position according │── S530
│         to identification code              │
└──────────────────────────────────────────┘
                     │
                     ▼
┌──────────────────────────────────────────┐
│ transmitting data transmission establishment │── S550
│               information                   │
└──────────────────────────────────────────┘
```

# FIG. 5

| subframe | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|---|---|---|---|---|---|---|---|---|---|---|---|
| NPDCCH | | UE1 | | | | | | | | | | UE2 | | | | | | | | | | | | | | | UE3 |
| NPDSCH | | | | | | | UE1 | UE1 | UE1 | | | | | | | | UE2 | UE2 | UE2 | | | | | | | | |
| NPUSCH | | | | | | | | | | | | | | | | | | | | | | | UE1 | | | | |

period of specific search space

FIG. 6

subframe | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26

NPDCCH: UE1 UE2 UE3 (subframes 1–3), UE4 UE5 UE6 (subframes 11–13), UE7 UE8 (subframes 18–19), UE1 (subframe 26)

NPDSCH: UE1 UE1 UE1 (subframes 7–9), UE2 (subframe 13), UE2 UE2 (subframes 16–17), UE3 UE3 UE3 (subframes 21–23)

NPUSCH: UE1 (subframe 22)

period of specific search space

FIG. 7

FIG. 8A

FIG. 8B

FIG. 9A

FIG. 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018287734 A1